# EUROPEAN PATENT APPLICATION

(11) **EP 4 810 921 A1**
(43) Date of publication of application: **23.09.2026**
(21) Application number: 24891118.2
(22) Date of filing: 07.10.2024
(51) Int. Cl.: G01F 23/292, G01F 23/14, G01N 35/10

(54) **LIQUID SURFACE DETECTION APPARATUS AND METHOD FOR LIQUID SURFACE DETECTION**

(30) Priority: 17.11.2023 JP 2023195980
(71) Applicant: Hitachi High-Tech Corporation, Minato-ku Tokyo 105-6409 (JP)
(72) Inventor: HORIHATA, Fumiyasu, Tokyo 105-6409 (JP); KAKUNO, Masahito, Tokyo 105-6409 (JP)
(74) Representative: MERH-IP Matias Erny Reichl Hoffmann Patentanwälte PartG mbB
(86) International application number: PCT/JP2024/035782
(87) International publication number: WO 2025/105076

(57) **Abstract**

The purpose of the present invention is to provide a liquid surface detection apparatus for determining, even in a non-contact manner, a liquid surface position with higher accuracy. For this purpose, the liquid surface detection apparatus of the present invention is provided with: a first liquid surface detection mechanism that detects, in a non-contact manner, the upper surface of a liquid in a container; a second liquid surface detection mechanism that detects, in a contact manner, the upper surface of the liquid in the container; and a control device that uses the detection result from the second liquid surface detection mechanism to correct the detection result from the first liquid surface detection mechanism. Preferably, the control device has a storage unit for storing a correction value for correcting the detection result from the first liquid surface detection mechanism. The correction value is calculated on the basis of a difference between a liquid surface position detected by the first liquid surface detection mechanism and a liquid surface position detected by the second liquid surface detection mechanism.

## Description

### Technical Field

The present invention relates to a liquid surface detection apparatus and a liquid surface detection method.

### Background Art

Automatic analyzers that perform qualitative and quantitative analysis on samples such as blood and urine are used. A sample testing automation system that automatically performs a pretreatment step of performing centrifugation or the like on a sample and a transport step of transporting the sample to each automatic analyzer is also used.

In the pretreatment step, the centrifugation of the sample and liquid surface detection of the sample after the centrifugation may be performed. For example, when the sample is blood, the blood is separated into serum (or plasma) and blood clot by the centrifugation. After the centrifugation, the liquid surface detection apparatus of the sample testing automation system measures a boundary surface between layers in a sample container and a liquid volume in a non-contact manner.

PTL 1 discloses a liquid surface detection apparatus that detects a liquid surface present in a sample container by controlling a relative position between an light emitter and a detection unit so as to move, in conjunction with moving the light emitter, which irradiates a part of the sample container storing a liquid substance with light, in a direction parallel to an axis of the sample container, the detection unit to a position where transmitted light can be detected, and detecting transmitted light over an entire length of the sample container.

### Citation List

### Patent Literature

PTL 1: JP2005-516212A

### Summary of Invention

### Technical Problem

However, in PTL 1, a meniscus is not considered. Therefore, a position higher than an actual liquid surface is determined as a top face of the liquid due to the meniscus, and there is a problem in detection accuracy of the liquid surface.

In view of the above problems, an object of the invention is to provide a liquid surface detection apparatus for determining, even in a non-contact manner, a liquid surface position with higher accuracy.

### Solution to Problem

In order to solve the above problems, a liquid surface detection apparatus of the invention includes: a first liquid surface detection mechanism configured to detect, in a non-contact manner, a top face of a liquid in a container; a second liquid surface detection mechanism configured to detect, in a contact manner, the top face of the liquid in the container; and a control device configured to correct a detection result from the first liquid surface detection mechanism by using a detection result from the second liquid surface detection mechanism.

### Advantageous Effects of Invention

The liquid surface detection apparatus according to the invention can determine a liquid surface with higher accuracy even in a non-contact manner.

### Brief Description of Drawings

[FIG. 1] FIG. 1 is a diagram showing an overall configuration of a sample testing automation system.
[FIG. 2] FIG. 2 is an overall configuration diagram of a liquid volume determination processing unit including a first liquid surface detection mechanism.
[FIG. 3] FIG. 3 is a flowchart showing a flow of liquid volume determination by the first liquid surface detection mechanism.
[FIG. 4] FIG. 4 shows examples of first transmitted light data and second transmitted light data.
[FIG. 5] FIG. 5 is a diagram of a sample container with a meniscus formed.
[FIG. 6] FIG. 6 is an overall configuration diagram of a dispensing processing unit including a second liquid surface detection mechanism.
[FIG. 7] FIG. 7 is a flowchart showing a method in which a control device corrects a detection result from the first liquid surface detection mechanism.

### Description of Embodiments

Embodiments of the invention will be described with reference to the drawings.

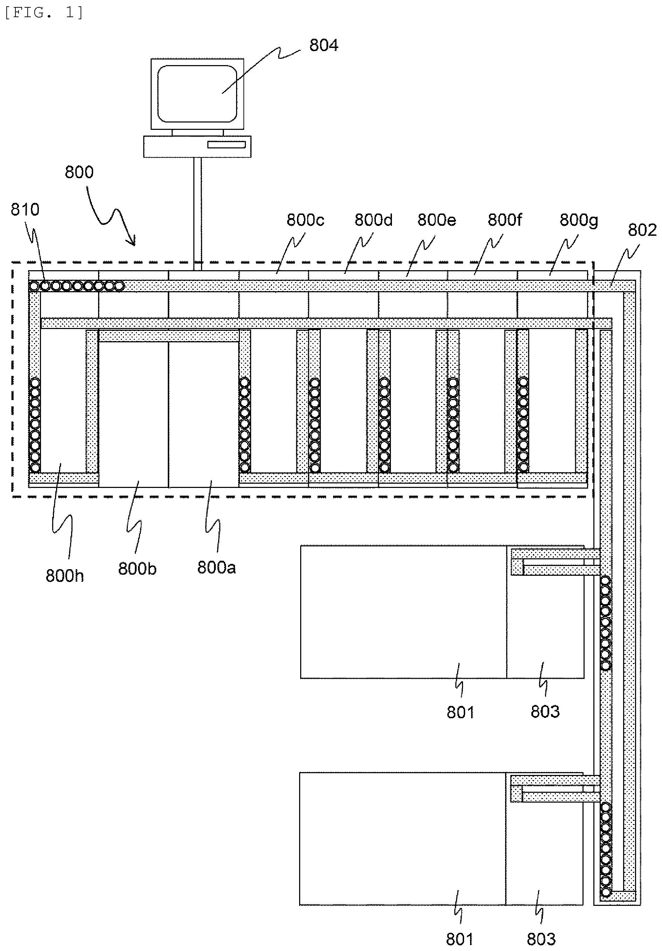

FIG. 1 is a diagram showing an overall configuration of a sample testing automation system. A sample testing automation system includes a pretreatment apparatus 800, a transport path 802, a plurality of sample transfer units 803, and a control device 804, and is connected to a plurality of analyzers 801. The pretreatment apparatus 800 performs various types of pretreatment on a sample contained in a sample container 120. The transport path 802 transports a holder 810 on which the sample container 120 is mounted between the pretreatment apparatus 800 and the analyzer 801. The sample transfer unit 803 is provided between the transport path 802 and each of the plurality of analyzers 801, and transfers the sample container 120 between the holder 810 transported by the transport path 802 and a rack used to mount and transport the sample container 120 in each analyzer 801. The control device 804 controls an operation of the entire sample testing automation system. The sample in the sample container 120 subjected to the pretreatment is subjected to analysis processing in the analyzer 801 connected to the sample testing automation system.

The control device 804 includes an operation control unit that controls an operation, an operation unit that receives an operation from a user, a display unit that displays an analysis result, a setting content, or the like, and a storage unit that stores the analysis result, the setting content, or the like. The storage unit also stores sample information such as analysis items and priority information of the sample contained in the sample container 120 loaded into the sample testing automation system, a relationship of each identifier with the sample, a correction value ΔH for correcting a detection result from a first liquid surface detection mechanism described later, or the like.

The pretreatment apparatus 800 is implemented by coupling a plurality of units having various functions.

The pretreatment apparatus 800 includes, for example, a sample loading unit 800a, a sample storage unit 800b, a centrifuge unit 800c, a liquid volume determination processing unit 800d, an uncapping processing unit 800e, a subsample container generation processing unit 800f, a dispensing processing unit 800g, and a capping processing unit 800h.

The sample loading unit 800a is a unit for loading the sample container 120 containing the sample into the sample testing automation system. In addition, a liquid (sample) recognition unit, a container recognition unit, and a sample holder recognition unit, which are not shown, are disposed in the sample loading unit 800a, and a container type of the transported sample container 120, a shape of a cap of the container, and ID information given to the holder 810 on which the sample container 120 is provided are recognized, and information for specifying the transported sample container 120 is obtained. The sample holder recognition unit (not shown) is provided in each place in the sample testing automation system, and the location of the sample container 120 can be checked by the sample holder recognition unit in each place.

The centrifuge unit 800c is a unit for performing centrifugation on the loaded sample container 120.

The liquid volume determination processing unit 800d is a unit for measuring and determining the amount and color of the sample contained in the transported sample container 120 by a first liquid surface detection mechanism 100 and an image recognition unit to be described later.

The uncapping processing unit 800e is a unit for uncapping the cap (not shown) from the loaded sample container 120.

The subsample container generation processing unit 800f is a unit for preparing another sample container 120 necessary for dispensing the sample contained in the loaded sample container 120 in the next dispensing processing unit 800g and attaching a barcode or the like.

The dispensing processing unit 800g is a unit for subdividing the sample into another sample container 120 prepared by the subsample container generation processing unit 800f in order to analyze, by the analyzer 801 or the like, the sample that has not been centrifuged or that has been centrifuged by the centrifuge unit 800c.

The capping processing unit 800h is a unit for capping the sample container 120 that is uncapped or the sample container 120 after subdividing. Depending on the type of the cap used to close the cap of the sample container 120, a sample testing automation system including two or more capping processing units 800h may also be configured.

The sample storage unit 800b is a unit that stores the sample container 120 capped by the capping processing unit 800h.

Note that this configuration is merely an example, and another functional unit may be provided in the pretreatment apparatus 800. Each unit of the pretreatment apparatus 800 is connected by the transport path 802, and the sample container 120 mounted on the holder 810 is transported by the transport path 802.

The transport path 802 is a mechanism that transports the sample container 120 loaded from the sample loading unit 800a or the sample container 120 after subdividing, in which the sample is dispensed by the dispensing processing unit 800g, to each unit in the sample testing automation system such as the centrifuge unit 800c and the dispensing processing unit 800g. The transport path 802 is also used for transport to each mechanism unit that performs a predetermined operation in each unit such as the centrifuge unit 800c and the dispensing processing unit 800g.

The control device 804 controls the operation of each unit in the sample testing automation system and each mechanism in each unit. The control device 804 can communicate with each unit and each mechanism described above and check the location of the sample in the sample testing automation system based on the ID information of the holder 810. In the embodiment, an example in which the entire sample testing automation system is controlled by one control device 804 is shown, but each unit may individually include the control device. In addition, although not shown, each analyzer 801 may individually include a control PC that performs analysis or the like on measurement data.

The analyzer 801 is a unit for performing qualitative and quantitative analysis on components in the transported sample. As the analyzer 801, various automatic analyzers that analyze components of a sample that is subjected to the pretreatment, such as a biochemical analyzer, an immune analyzer, and a coagulation analyzer, can be used depending on the application.

Here, in the embodiment, a liquid surface detection apparatus including the first liquid surface detection mechanism 100, a second liquid surface detection mechanism 200, and the control device 804 is mounted as a part of the sample testing automation system (the control device 804 is also used as an apparatus other than the liquid surface detection apparatus). The first liquid surface detection mechanism 100 is incorporated in the liquid volume determination processing unit 800d between the sample loading unit 800a and the dispensing processing unit 800g. Therefore, when the liquid volume determination processing unit 800d determines that the volume of the sample contained in the sample container 120 is not sufficient, the control device 804 does not transport the sample container 120 to the dispensing processing unit 800g, and can carry out the sample container 120 as an error sample. In addition, since the first liquid surface detection mechanism 100 can detect the liquid surface position (top face height) of the sample in a non-contact manner, direct stimulation to the sample before dispensing is also limited. On the other hand, the second liquid surface detection mechanism 200 is incorporated in the dispensing processing unit 800g. Since the second liquid surface detection mechanism 200 is a contact type, the second liquid surface detection mechanism 200 can detect the liquid surface position more accurately than a non-contact type, and thus the dispensing accuracy can be improved. Hereinafter, the first liquid surface detection mechanism 100 and the second liquid surface detection mechanism 200 will be specifically described.

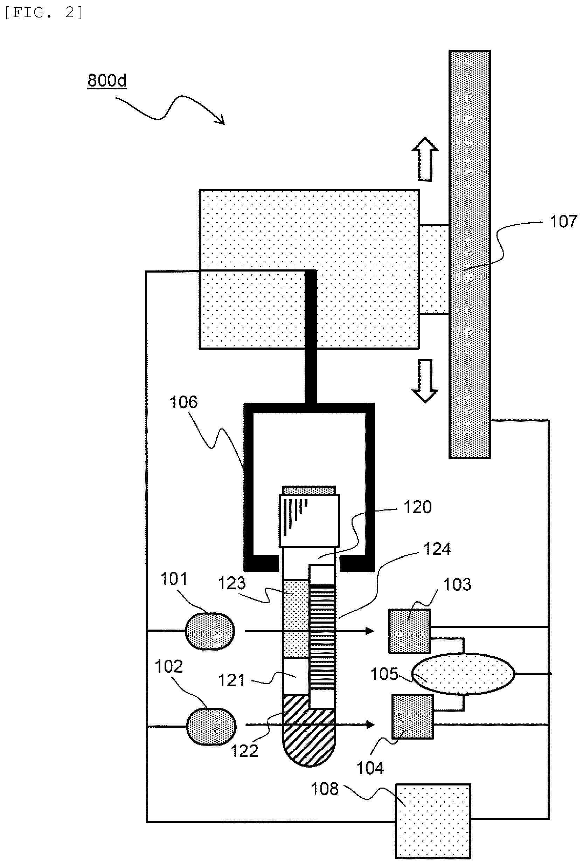

FIG. 2 is an overall configuration diagram of the liquid volume determination processing unit including the first liquid surface detection mechanism. A sample to be detected by the first liquid surface detection mechanism 100 is contained in the sample container 120. There are various types of sample containers 120, and a user uses the sample containers 120 according to the application. For example, a material of the sample container 120 is various resin materials or various glass materials, and the sample container 120 is substantially transparent. In addition, a shape of the sample container 120 is a bottomed tubular shape elongated in an up-down direction, a cylindrical shape or a tapered shape, and those having different diameters, those having different heights, those having different caps, or the like are mixed and used. FIG. 2 shows an example in which a test tube is used as the sample container 120.

A sample contained in the sample container 120 is separated into a layer of a substance having a relatively large specific gravity and a layer of a substance having a relatively small specific gravity by centrifugation. The sample container 120 may store a separator 121 having a specific gravity intermediate between these substances. In the embodiment, a blood sample collected from a patient is used as the sample. The blood sample is separated into a blood clot 122 having a relatively large specific gravity and a serum 123 (or plasma) having a relatively small specific gravity by centrifugation. In addition, the separator 121 is stored in the sample container 120, and after centrifugation, the blood clot 122 and the serum 123 are separated by the separator 121.

The sample may be a biological sample such as urine other than the blood sample, a mixed solution obtained by mixing a biological sample and a reagent, a reaction solution obtained by reacting these, or the like. In addition, separation may be performed without using a separator.

As shown in FIG. 2, the liquid volume determination processing unit 800d mainly includes a grip portion 106, a first drive unit 107, a first light emitter 101, a second light emitter 102, a first light receiver 103, a second light receiver 104, a first analysis unit 105, and a first control unit 108.

The sample container 120 is gripped by the grip portion 106. The grip portion 106 is moved in the up-down direction by the first drive unit 107. The first drive unit 107 moves, in the up-down direction, the sample container 120 gripped by the grip portion 106.

The first light emitter 101, the second light emitter 102, the first light receiver 103, the second light receiver 104, and the first analysis unit 105 constitute the first liquid surface detection mechanism 100. The first light emitter 101 emits light of a first wavelength component (for example, 1550±100 nm) from a side surface of the sample container 120. The light having the first wavelength component is absorbed by the liquid, and thus is not transmitted through the liquid. That is, the light of the first wavelength component has different transmissivities between when passing through the liquid and when passing through the air. The second light emitter 102 emits light of a second wavelength component (for example, 830±100 nm) different from the first wavelength component from the side surface of the sample container 120. The light of the second wavelength component passes through the liquid. The first light receiver 103 receives first transmitted light obtained by transmitting the light of the first wavelength component through the sample container 120. The second light receiver 104 receives second transmitted light obtained by transmitting the light of the second wavelength component through the sample container 120. The first analysis unit 105 analyzes transmitted light data at different positions in the up-down direction. Specifically, the first analysis unit 105 obtains, for example, a boundary surface between different liquids (layers), a boundary surface between a separator and a liquid, and a boundary surface between a liquid and a gas (air) based on the first transmitted light data acquired by the first light receiver 103 and the second transmitted light data acquired by the second light receiver 104. A method of obtaining the boundary surface will be described below.

One light receiver and one light emitter may be provided, and by providing the light receiver and the light emitter for each wavelength, the first transmitted light data and the second transmitted light data can be acquired by one movement of the sample container 120 in the up-down direction. When there is one light receiver and one light emitter, the first transmitted light data and the second transmitted light data can be acquired by acquiring the first transmitted light data, then changing a wavelength of the light emitter to a second wavelength, and acquiring the second transmitted light data.

The first control unit 108 controls operations of the first light emitter 101, the second light emitter 102, the first light receiver 103, the second light receiver 104, the first analysis unit 105, the grip portion 106, and the first drive unit 107. The first control unit 108 may have the function of the first analysis unit 105. In addition, a control device provided outside the first liquid surface detection mechanism 100 may have the functions of the first analysis unit 105 and the first control unit 108.

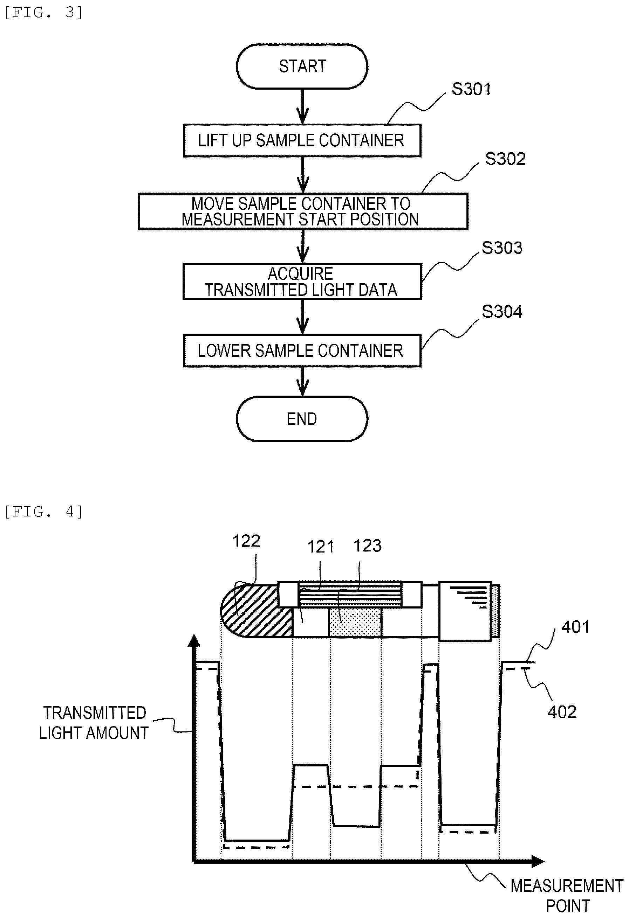

FIG. 3 is a flowchart showing a flow of liquid volume determination by the first liquid surface detection mechanism. When the sample container 120 reaches a predetermined liquid surface detection position, the first liquid surface detection mechanism 100 starts a detection operation, and the first control unit 108 performs control as follows.

The first control unit 108 lifts up the sample container 120 using the first drive unit 107 by gripping the arrived sample container 120 by the grip portion 106 (step S301).

Further, the first control unit 108 moves the sample container 120 to a transmitted light measurement start position by the first drive unit 107 (step S302). The transmitted light measurement start position may be above or below the sample container 120.

Next, the first control unit 108 irradiates the sample container 120 with light by the first light emitter 101 and the second light emitter 102 while moving the sample container 120 in the up-down direction from the transmitted light measurement start position by the first drive unit 107. At this time, the first light receiver 103 and the second light receiver 104 receive the transmitted light transmitted through the sample container 120, and acquire the transmitted light data at different positions in the up-down direction (step S303).

The transmittance of light varies depending on the type of liquid or separator, and therefore, the amount of received transmitted light (the transmitted light amount) changes greatly when the light irradiation position is on the boundary surface between different liquids, the boundary surface between a liquid and a separator, or the boundary surface between a liquid and a gas. Therefore, a position where the transmitted light amount changes greatly can be determined as the boundary surface. That is, the first control unit 108 performs scanning in the up-down direction at a predetermined position (irradiation angle) in a circumferential direction of the sample container 120 to acquire the transmitted light amount, and the first analysis unit 105 analyzes the change. The data on the transmitted light amount may be acquired as luminance data.

The sample container 120 for which the measurement of the transmitted light has been completed is returned to the position before being lifted up by the first drive unit 107, and the grip portion 106 stops gripping the sample container 120 (step S304). Thereafter, the sample container 120 is transported for the next step.

FIG. 4 shows an example of the first transmitted light data and the second transmitted light data acquired in step S303 of FIG. 3. The first analysis unit 105 detects the boundary surface based on a difference between first transmitted light data 401 (the transmitted light amount of the first transmitted light) and second transmitted light data 402 (the transmitted light amount of the second transmitted light).

The blood clot 122 blocks both the light of the first wavelength component emitted by the first light emitter 101 and the light of the second wavelength component emitted by the second light emitter 102 while hardly transmitting them. Therefore, the transmitted light amount when the light of the first wavelength component and the light of the second wavelength component are emitted to the blood clot 122 is substantially the same and has low values. The separator 121 easily allows both the light of the first wavelength component and the light of the second wavelength component to transmit, as compared with the blood clot 122, and therefore, the transmitted light amount is increased.

In contrast, in the serum 123, the transmittance for the light of the first wavelength component and the transmittance for the light of the second wavelength component are greatly different. As described above, the light of the first wavelength component is absorbed by the liquid and is not transmitted through the liquid, and therefore, the transmitted light amount (first transmitted light data 401) when the serum 123 is irradiated becomes a low value. On the other hand, the light of the second wavelength component passes through the liquid as described above, and therefore, the transmitted light amount (second transmitted light data 402) when the serum 123 is irradiated maintains a relatively high value.

The air above the serum 123 easily allows both the light of the first wavelength component and the light of the second wavelength component to transmit, and therefore, the transmitted light amount when the air is irradiated with both the light of the first wavelength component and the light of the second wavelength component is relatively high. A label 124 attached to the sample container 120 so as to extend over each layer of the sample hardly allows both the light of the first wavelength component and the light of the second wavelength component to transmit, as compared with air, and therefore, the transmitted light amount decreases. The transmitted light amount that decreases at this time varies depending on a material and the number of labels 124.

As described above, in the second transmitted light data 402, a relatively high transmitted light amount is also obtained when the separator 121, the serum 123, and the air are irradiated. On the other hand, in the first transmitted light data 401, the transmitted light amount when the serum 123 is irradiated is lower than the transmitted light amount when the separator 121 is irradiated, and the transmitted light amount when the air is irradiated is as high as the transmitted light amount in the case of the separator 121. That is, the first transmitted light data 401 greatly changes at a boundary surface between the separator 121 and the serum 123 and a boundary surface between the serum 123 and the gas. The transmitted light amount when the separator 121 and the air are irradiated is higher in the first transmitted light data 401 than that in the second transmitted light data 402, and the transmitted light amount when the serum 123 is irradiated is higher in the second transmitted light data 402 than that in the first transmitted light data 401. Therefore, the first analysis unit 105 can detect, as the boundary surface, a position where the first transmitted light data 401 and the second transmitted light data 402 in FIG. 4 intersect. Specifically, among positions where a difference between the first transmitted light data 401 and the second transmitted light data 402 is zero, a lower position can be detected as the boundary surface between the separator 121 and the serum 123, and an upper position can be detected as the boundary surface between the serum 123 and the gas. The first analysis unit 105 calculates the amount of serum in the sample container 120 based on the detected boundary surface. The calculated amount of serum is used for a plan for dispensing the serum.

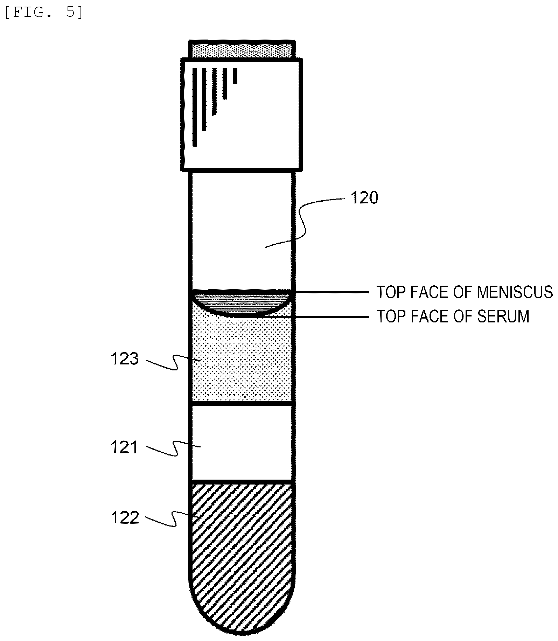

However, a top face of the serum in the sample container 120 is not actually horizontal, and a meniscus is formed as shown in FIG. 5, and the liquid surface rises high toward a container wall surface. Therefore, there is a problem that the top face of the meniscus higher than a position to be originally detected is determined as the boundary surface between the serum 123 and the air only by the determination of the first liquid surface detection mechanism described above. When the top face of the meniscus at a position higher than the top face of the serum is determined as the boundary surface, the amount of the serum 123 is overestimated. When the amount of the serum is overestimated, the serum 123 is insufficient when the serum 123 is dispensed, and a dispensing probe may reach the separator 121 or the blood clot 122 below the serum 123 to cause clogging of the dispensing probe. When the clogging of the dispensing probe occurs, the sample aspirated when the clogging occurs cannot be used, and the sample is wasted. In addition, the testing result is delayed due to the device stop. When a disposable dispensing tip is used for the dispensing probe, the used dispensing tip is also wasted.

Therefore, in the embodiment, the detection result from the first liquid surface detection mechanism 100 is corrected using the detection result from the second liquid surface detection mechanism 200. Accordingly, the detection accuracy of the first liquid surface detection mechanism 100, which is a non-contact type, is improved, and it is possible to prevent the occurrence of the above-described problem, which is concerned after the dispensing step.

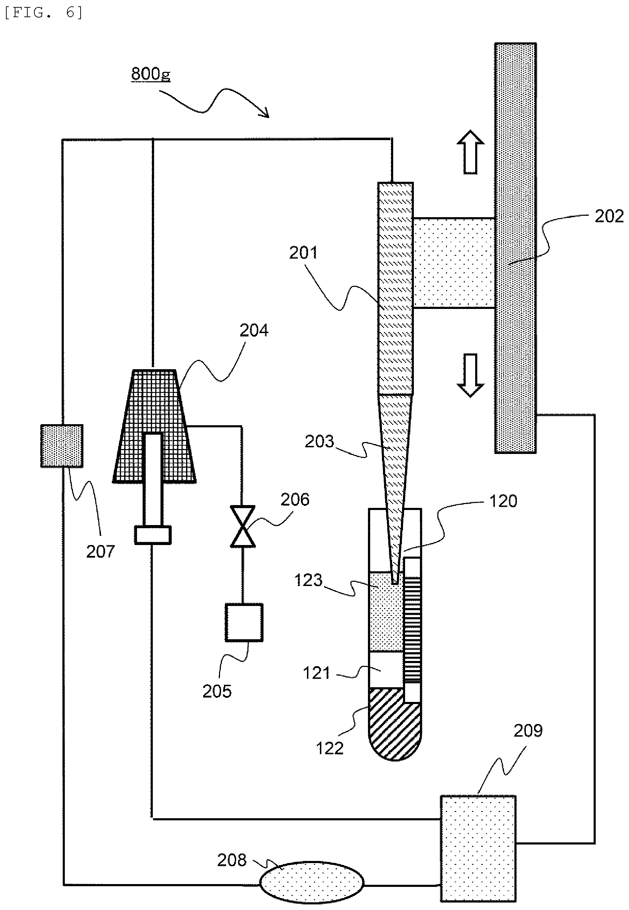

FIG. 6 is an overall configuration diagram of the dispensing processing unit including the second liquid surface detection mechanism. As shown in FIG. 6, the dispensing processing unit 800g mainly includes a dispensing probe 201, a second drive unit 202, a dispensing tip 203, a syringe 204, a pump 205, a valve 206, a pressure sensor 207, a second analysis unit 208, and a second control unit 209.

The dispensing probe 201 aspirates or discharges a sample from the sample container 120. The second drive unit 202 moves the dispensing probe 201 in the up-down direction. The dispensing tip 203 is attached to a tip end of the dispensing probe 201 as necessary. The syringe 204 is connected to the dispensing probe 201, and aspirates and discharges the sample. The pump 205 supplies system water to the syringe 204. The valve 206 opens and closes a flow path connecting the syringe 204 and the pump 205.

The pressure sensor 207 and the second analysis unit 208 constitute the second liquid surface detection mechanism 200. The pressure sensor 207 is provided in the middle of a flow path connecting the dispensing probe 201 and the syringe 204, measures a pressure in the flow path, and outputs measurement data to the second analysis unit 208. The second analysis unit 208 detects the top face height of the sample based on the measurement data output from the pressure sensor 207, and outputs the detection result to the second control unit 209.

The second control unit 209 controls operations of the second drive unit 202, the syringe 204, and the second analysis unit 208. The second control unit 209 may have the function of the second analysis unit 208. In addition, a control device provided outside the second liquid surface detection mechanism 200 may have the functions of the second analysis unit 208 and the second control unit 209.

When the dispensing processing unit 800g aspirates the sample from the sample container 120, first, the second control unit 209 controls the second drive unit 202 to lower the dispensing probe 201. When the second control unit 209 detects that the sample has come into contact with the tip end of the dispensing tip 203 based on a change in the measurement data of the pressure sensor 207, the second control unit 209 stores the position in the storage unit as the top face height of the sample, and further lowers the dispensing probe 201 by a predetermined height. Thereafter, the second control unit 209 operates the syringe 204 to aspirate the sample via the system water filled in the flow path. When the dispensing processing unit 800g discharges the sample to another sample container 120, the second control unit 209 operates the syringe 204 in the reverse direction to discharge the sample via the system water.

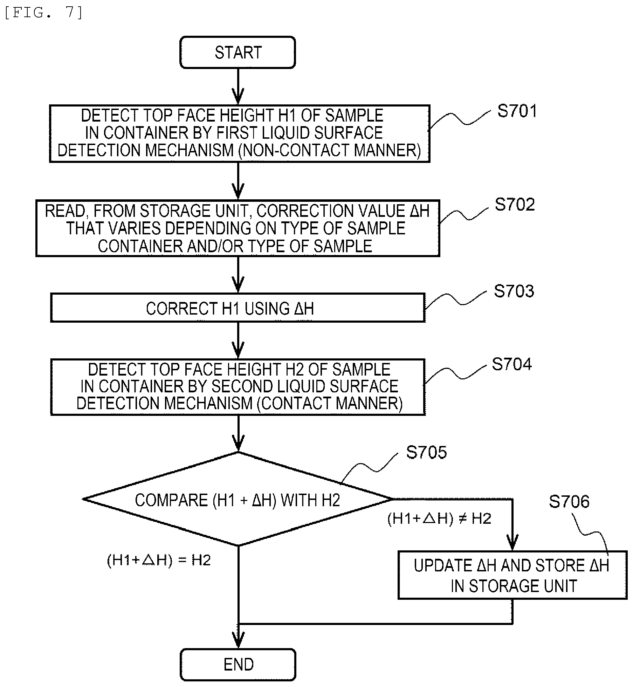

Next, a method of correcting the detection result from the first liquid surface detection mechanism 100 using the detection result from the second liquid surface detection mechanism 200 will be described with reference to FIG. 7. Hereinafter, a case where the control device 804 performs this correction will be described as an example, but this correction may be performed by the first control unit 108. FIG. 7 is a flowchart showing the method in which the control device corrects the detection result from the first liquid surface detection mechanism.

First, the control device controls the liquid volume determination processing unit 800d including the first liquid surface detection mechanism 100 to detect a top face height H1 of the sample in the sample container 120 in a non-contact manner (step S701). Here, a predetermined position above the sample container 120 is set as a reference for the height, and a distance from the reference to the top face of the sample on the lower side is set as the top face height H1.

Next, the control device reads, from the storage unit, the correction value ΔH for correcting the top face height H1 of the sample (step S702). Here, in order to achieve more accurate correction, the storage unit stores the correction value ΔH that varies depending on the type of sample container 120 and/or the type of sample.

The type of the sample container 120 corresponds to a material, a shape, or the like, and when these are different, the size of the meniscus changes. The type of the sample container 120 is determined by the container recognition unit in the sample loading unit 800a. The type of the sample corresponds to blood or urine, even when the sample is the same blood, the type of the sample corresponds to whether the same blood is serum or whole blood, whether an anticoagulant is contained, or the like, and the size of the meniscus changes when these are different. The type of the sample is determined by the liquid (sample) recognition unit in the sample loading unit 800a. The correction value ΔH is calculated in advance by the control device based on the difference between the top face height of the sample detected in the past by the first liquid surface detection mechanism 100 and the top face height of the sample detected by the second liquid surface detection mechanism 200.

Thereafter, the control device corrects the top face height H1 detected in step S701 using the correction value ΔH read in step S702 (step S703). The corrected top face height is H1 + ΔH. By performing correction in this manner, the detection accuracy of the first liquid surface detection mechanism 100, which is a non-contact type, is improved, and it is possible to prevent the occurrence of clogging of the dispensing probe 201 in the subsequent step. In a general meniscus, as described above, the liquid surface rises up toward the container wall surface, and ΔH becomes positive, but depending on the sample or the sample container, a meniscus in which the liquid surface becomes lower toward the container wall surface may be generated, and in this case, ΔH becomes negative.

Next, when the sample in the sample container 120 is dispensed into another sample container 120 in the dispensing processing unit 800g, the control device controls the second liquid surface detection mechanism 200 to detect a top face height H2 of the sample in the sample container 120 by a contact manner (step S704).

Thereafter, the control device compares the top face height (H1 + ΔH) corrected in step S703 with the top face height H2 detected in step S704 (step S705). When it is determined in step S705 that (H1 + ΔH) = H2, the control device ends the processing without updating ΔH.

On the other hand, when it is determined that (H1 + ΔH) ≠ H2 in step S705, the control device updates ΔH and stores the updated ΔH in the storage unit (step S706), and then ends the processing.

Here, examples of the method of updating ΔH include the following two methods. The first method is a method in which (ΔH before update + difference between H1 and H2 detected this time)/2 = ΔH after update. The second method is a method in which (difference between H1 and H2 in the past ten times)/2 = ΔH after update.

In addition, the processing of determining whether to update ΔH and updating ΔH in the step S705 and the step S706 may be performed every time the dispensing processing unit dispenses the sample or every time the calibration is performed. As in the former case, in the case of the mode in which ΔH is updated every time dispensing is performed, it can be expected to converge to more optimal ΔH by repeatedly analyzing the components of the sample. On the other hand, as in the latter case, in the case of the mode in which ΔH is updated every time the calibration is performed, since the detection result of the subsequent sample can be corrected in a state in which ΔH calculated when the sample for the calibrator is dispensed is fixed, it is possible to reduce the calculation load. Further, the former mode and the latter mode may be selected by the user through the operation unit.

According to the embodiment, in the liquid volume determination processing unit 800d, the top face of the sample can be determined more accurately, and the liquid surface detection accuracy is improved. Further, when the amount of sample is accurately known, more appropriate request items can be set for the amount of sample.

The first liquid surface detection mechanism 100 in the above-described embodiment detects the liquid surface position (the top face height H1 of the sample) based on the first transmitted light data 401 and the second transmitted light data 402, but may detect the liquid surface position based on image analysis using another non-contact manner, for example, a camera.

In addition, the second liquid surface detection mechanism 200 in the above-described embodiment detects the liquid surface position (the top face height H2 of the sample) based on the measurement data of the pressure sensor 207, but may detect the liquid surface position based on measurement data of another contact manner, for example, a capacitance sensor.

Further, in the above-described embodiment, a liquid surface detection apparatus including the first liquid surface detection mechanism 100, the second liquid surface detection mechanism 200, and the control device 804 is mounted as a part of the sample testing automation system (the control device 804 is also used as an apparatus other than the liquid surface detection apparatus). However, the liquid surface detection apparatus described above may be used as a single apparatus, or may be used as an automatic analyzer and a sample pretreatment apparatus that automatically performs pretreatment on a sample. In addition, a detection target of the liquid surface detection apparatus is not limited to the sample, and may be another liquid such as a reagent.

### Reference Signs List

- 100:: first liquid surface detection mechanism
- 101:: first light emitter
- 102:: second light emitter
- 103:: first light receiver
- 104:: second light receiver
- 105:: first analysis unit
- 106:: grip portion
- 107:: first drive unit
- 108:: first control unit
- 120:: sample container
- 121:: separator
- 122:: blood clot
- 123:: serum
- 124:: label
- 201:: dispensing probe
- 202:: second drive unit
- 203:: dispensing tip
- 204:: syringe
- 205:: pump
- 206:: valve
- 207:: pressure sensor
- 208:: second analysis unit
- 209:: second control unit
- 401:: first transmitted light data
- 402:: second transmitted light data
- 800:: pretreatment apparatus
- 800a:: sample loading unit
- 800b:: sample storage unit
- 800c:: centrifuge unit
- 800d:: liquid volume determination processing unit
- 800e:: uncapping processing unit
- 800f:: subsample container generation processing unit
- 800g:: dispensing processing unit
- 800h:: capping processing unit
- 801:: analyzer
- 802:: transport path
- 803:: sample transfer unit
- 804:: control device
- 810:: holder

## Claims

1. A liquid surface detection apparatus comprising:
a first liquid surface detection mechanism configured to detect, in a non-contact manner, a top face of a liquid in a container;
a second liquid surface detection mechanism configured to detect, in a contact manner, the top face of the liquid in the container; and
a control device configured to correct a detection result from the first liquid surface detection mechanism by using a detection result from the second liquid surface detection mechanism.

2. The liquid surface detection apparatus according to claim 1, wherein
the control device includes a storage unit that stores a correction value for correcting the detection result from the first liquid surface detection mechanism, and
the correction value is calculated based on a difference between a liquid surface position detected by the first liquid surface detection mechanism and a liquid surface position detected by the second liquid surface detection mechanism.

3. The liquid surface detection apparatus according to claim 2, further comprising:
a container recognition unit configured to determine a type of the container, wherein
the storage unit stores the correction value that varies depending on the type of the container.

4. The liquid surface detection apparatus according to claim 2, further comprising:
a liquid recognition unit configured to determine a type of the liquid, wherein
the storage unit stores the correction value that varies depending on the type of the liquid.

5. The liquid surface detection apparatus according to claim 4, wherein
the storage unit stores the correction value that varies between a case where the liquid is blood and a case where the liquid is urine.

6. The liquid surface detection apparatus according to claim 5, wherein
the storage unit stores the correction value that varies between blood containing an anticoagulant and blood not containing the anticoagulant.

7. The liquid surface detection apparatus according to claim 2, wherein
the liquid is a sample,
the second liquid surface detection mechanism is provided in a dispensing processing unit that dispenses the sample from the container into another container, and
the first liquid surface detection mechanism is provided between the dispensing processing unit and a sample loading unit for loading the container containing the sample.

8. The liquid surface detection apparatus according to claim 7, wherein
the control device further includes an operation unit that receives an operation from a user, and
a mode in which the correction value is updated every time the sample is dispensed by the dispensing processing unit and a mode in which the correction value is updated every time calibration is performed are selectable by the operation unit.

9. A liquid surface detection method comprising:
a step of detecting, by a first liquid surface detection mechanism, a top face of a liquid in a container in a non-contact manner;
a step of detecting, by a second liquid surface detection mechanism, the top face of the liquid in the container in a contact manner; and
a step of correcting, by a control device, a detection result from the first liquid surface detection mechanism by using a detection result from the second liquid surface detection mechanism.
